# EUROPEAN PATENT APPLICATION

(11) **EP 4 393 993 A1**
(43) Date of publication of application: **03.07.2024**
(21) Application number: 22860914.5
(22) Date of filing: 26.05.2022
(51) Int. Cl.: C08L 9/02, C08K 3/04, H01B 1/24

(54) **CONDUCTIVE RUBBER COMPOSITION FOR SENSING**

(30) Priority: 25.08.2021 JP 2021137528
(71) Applicant: BRIDGESTONE CORPORATION, Chuo-ku Tokyo 104-8340 (JP)
(72) Inventor: URATA, Tomohiro, Tokyo 104-8340 (JP)
(74) Representative: Marks & Clerk LLP
(86) International application number: PCT/JP2022/021629
(87) International publication number: WO 2023/026618

(57) **Abstract**

The technical problem of the present disclosure is to provide a conductive rubber composition for sensing that has good responsiveness of changes in electrical resistance to strain and can accurately detect the occurrence of cracks. The solution is a conductive rubber composition for sensing, containing a rubber component and carbon black, wherein the rubber component contains 80% by mass or more of acrylonitrile-butadiene rubber, a product (A × B × C) of a cetyltrimethylammonium bromide (CTAB) adsorption specific surface area A (m²/g) of the carbon black, a compressed dibutyl phthalate (24M4DBP) absorption amount B (mL/100g) of the carbon black, and a content C (parts by mass) of the carbon black per 100 parts by mass of the rubber component is 600,000 or more, and the cetyltrimethylammonium bromide (CTAB) adsorption specific surface area A of the carbon black is 110 m²/g or more.

## Description

### TECHNICAL FIELD

This disclosure relates to a conductive rubber composition for sensing.

### BACKGROUND

A rubber actuator (which is so-called "McKibben type") comprising a rubber tube that expands and contracts using a working fluid and a sleeve (mesh reinforcement structure) that covers the outer surface of the rubber tube has been known. For rubber products that repeatedly deform, such as the rubber tube of the rubber actuator, it is possible to measure the amount of deformation of the rubber member from the electrical resistance of the rubber member (Patent Document 1 below).

### CITATION LIST

### Patent Literature

PTL 1: JP 2008-037906 A

### SUMMARY

### (Technical Problem)

According to the art described in the above Patent Document 1, the amount of deformation of the rubber member can be determined by measuring the electrical resistance of the rubber member. However, it is not possible to detect the presence or absence of cracks in the rubber member. For rubber actuators that are filled with oil or other liquids, early detection of cracks in the rubber tube is important because cracks in the rubber tube may cause the tube to rupture or render the rubber actuator unusable.

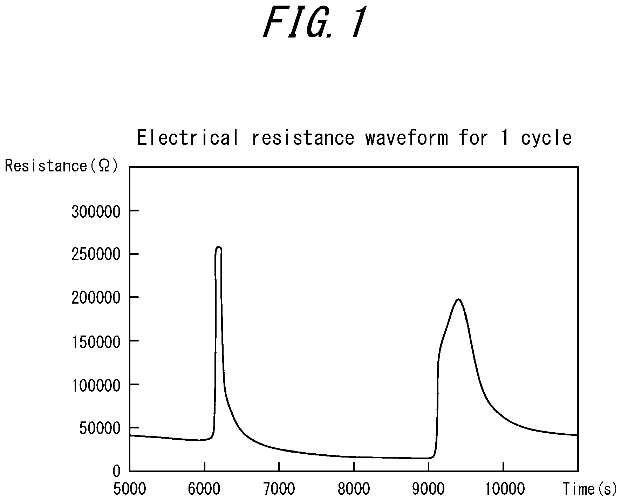

The inventors examined the electrical resistance of the rubber tube during one cycle of expansion and contraction of the rubber actuator and immediately monitored the electrical resistance of the rubber tube during expansion and contraction, and found that the waveform of electrical resistance of one cycle before cracking, at the initial stage of cracking, and in the advanced state of cracking changed due to strain caused by the cracking (FIG. 1). However, with general conductive rubber, it is difficult to capture the changes in the waveform of electrical resistance due to strain caused by such cracks, and it is difficult to confirm the early stages of crack initiation by monitoring the electrical resistance alone. Accordingly, the use of conductive rubber composition for sensing with good responsiveness of changes in the electrical resistance to strain makes it possible to detect the occurrence of cracks with high accuracy.

Therefore, the present disclosure is to solve the technical problems of the aforementioned prior art, and to provide a conductive rubber composition for sensing that has good responsiveness of changes in electrical resistance to strain and can accurately detect the occurrence of cracks.

### (Solution to Problem)

The gist of the conductive rubber composition for sensing in accordance with the present disclosure to solve the above technical problems is as follows.
[1] A conductive rubber composition for sensing, containing a rubber component and carbon black,
   wherein the rubber component contains 80% by mass or more of acrylonitrile-butadiene rubber,
   a product (A × B × C) of a cetyltrimethylammonium bromide (CTAB) adsorption specific surface area A (m²/g) of the carbon black, a compressed dibutyl phthalate (24M4DBP) absorption amount B (mL/100g) of the carbon black, and a content C (parts by mass) of the carbon black per 100 parts by mass of the rubber component is 600,000 or more, and
   the cetyltrimethylammonium bromide (CTAB) adsorption specific surface area A of the carbon black is 110 m²/g or more.
[2] The conductive rubber composition for sensing according to [1], wherein the rubber component consists solely of acrylonitrile-butadiene rubber with an acrylonitrile unit content of 34% by mass or more.
[3] The conductive rubber composition for sensing according to [1] or [2], wherein the product (A × B × C) of the cetyltrimethylammonium bromide (CTAB) adsorption specific surface area A (m²/g) of the carbon black, the compressed dibutyl phthalate (24M4DBP) absorption amount B (mL/100g) of the carbon black, and the content C (parts by mass) of the carbon black per 100 parts by mass of the rubber component is 650,000 or more and 900,000 or less.
[4] The conductive rubber composition for sensing according to any one of [1] to [3], wherein the content C of the carbon black per 100 parts by mass of the rubber component is 45 parts by mass or more and 75 parts by mass or less.

### (Advantageous Effect)

According to the present disclosure, it is possible to provide a conductive rubber composition for sensing that has good responsiveness of changes in electrical resistance to strain and can accurately detect the occurrence of cracks.

### BRIEF DESCRIPTION OF THE DRAWINGS

In the accompanying drawings:
FIG. 1 provides the waveform of electrical resistance for one cycle with respect to an example rubber actuator;
FIG. 2 is a side view of an example rubber actuator;
FIG. 3 is a partially exploded perspective view of an example rubber actuator;
FIG. 4 is a partial cross-sectional view of an example rubber tube; and
FIG. 5 provides examples of changes in electrical resistance with and without responsiveness, respectively.

### DETAILED DESCRIPTION

The following is a detailed illustration of the conductive rubber composition for sensing of this disclosure, based on the embodiments thereof.

### <Conductive rubber composition for sensing>

The conductive rubber composition for sensing of this disclosure includes a rubber component and carbon black. Here, the conductive rubber composition for sensing of this disclosure is characterized in that the rubber component contains 80% by mass or more of acrylonitrile-butadiene rubber, a product (A × B × C) of a cetyltrimethylammonium bromide (CTAB) adsorption specific surface area A (m²/g) of the carbon black, a compressed dibutyl phthalate (24M4DBP) absorption amount B (mL/100g) of the carbon black, and a content C (parts by mass) of the carbon black per 100 parts by mass of the rubber component is 600,000 or more, and the cetyltrimethylammonium bromide (CTAB) adsorption specific surface area A of the carbon black is 110 m²/g or more.

The CTAB adsorption specific surface area A of carbon black is an indicator of the particle size of carbon black. The larger the CTAB adsorption specific surface area A, the smaller the particle size of carbon black and the lower the electrical resistance of the rubber composition. In addition, the 24M4DBP absorption amount B of carbon black is a physical property related to the structure of carbon black, and the larger the 24M4DBP absorption amount B, the lower the electrical resistance of the rubber composition. The 24M4DBP absorption amount B of carbon black is also an indicator of high strain loss and is related to the amount of friction between carbon blacks at high strain. When the amount of friction between carbon blacks is larger at high strain, the change in electrical resistance due to expansion and contraction during use (high strain) becomes large, and the responsiveness of changes in electrical resistance to strain becomes better. Further, the higher the content C of carbon black per 100 parts by mass of the rubber component, the lower the electrical resistance of the rubber composition. In this disclosure, when 80% by mass or more of the rubber component consists of acrylonitrile-butadiene rubber: if the aforementioned product (A × B × C) is 600,000 or more, and the cetyltrimethylammonium bromide (CTAB) adsorption specific surface area A of the carbon black is 110 m²/g or more, the electrical resistance of the rubber composition is sufficiently low, in addition to that, the electrical resistance changes reproducibly when strain is applied, and the electrical resistance returns reversibly when the strain is removed. This is thought to improve the responsiveness of changes in electrical resistance to strain.

As described above, the conductive rubber composition for sensing of this disclosure has better responsiveness of changes in electrical resistance to strain. Therefore, by combining the conductive rubber composition for sensing of this disclosure with AI learning that uses electrical resistance as an input, it is possible to detect the occurrence of cracks from the dynamic behavior of changes in electrical resistance (AI sensing).

In addition, in the conductive rubber composition for sensing of this disclosure, 80% by mass or more of the rubber component consists of acrylonitrile-butadiene rubber, and the acrylonitrile-butadiene rubber has high oil resistance. Therefore, the conductive rubber composition for sensing of this disclosure has high oil resistance and is suitable for applications where oil resistance is required, e.g., rubber tubes for rubber actuators.

### (Rubber component)

The conductive rubber composition for sensing of this disclosure contains a rubber component, which provides rubber elasticity to the composition and allows the rubber composition to expand and contract.

The rubber component of the conductive rubber composition for sensing of this disclosure contains 80% by mass or more of, preferably contains 90% by mass or more of, acrylonitrile-butadiene rubber (NBR). In addition, it is preferable that the rubber component contains 80% by mass or more of acrylonitrile-butadiene rubber with an acrylonitrile unit content of 34% by mass or more, and it is even more preferable that it consists solely of the acrylonitrile-butadiene rubber with an acrylonitrile unit content of 34% by mass or more. The acrylonitrile-butadiene rubber has excellent oil resistance, and therefore, the conductive rubber composition for sensing of this disclosure, in which 80% by mass or more of the rubber component consists of acrylonitrile-butadiene rubber, has high oil resistance and is suitable for applications requiring oil resistance, e.g., rubber tubes for rubber actuators. Furthermore, when the rubber component consists solely of the acrylonitrile-butadiene rubber with an acrylonitrile unit content of 34% by mass or more, oil resistance is further improved.

The acrylonitrile unit content of the acrylonitrile-butadiene rubber (NBR) is preferably 34% by mass or more, and more preferably 45% by mass or more from the viewpoint of oil resistance; and is preferably 50% by mass or less from the viewpoint of fatigue resistance and crack extension resistance.

The acrylonitrile unit content (bound acrylonitrile content) of the acrylonitrile-butadiene rubber (NBR) can be measured by the Kjeldahl method according to JIS K6384.

The rubber component may further contain other rubber components. As such other rubber components, various rubber components that provide rubber elasticity to the composition can be utilized. The other rubber components include natural rubber (NR), synthetic isoprene rubber (IR), butadiene rubber (BR), styrene-butadiene rubber (SBR), chloroprene rubber (CR), etc. The number of rubber components used may be one or two or more.

### (Carbon black)

The conductive rubber composition for sensing of this disclosure contains carbon black, which provides conductivity to the composition and enables sensing of the rubber composition.

The product (A × B × C) of the cetyltrimethylammonium bromide (CTAB) adsorption specific surface area A (m²/g) of the carbon black, the compressed dibutyl phthalate (24M4DBP) absorption amount B (mL/100g) of the carbon black, and the content C (parts by mass) of the carbon black per 100 parts by mass of the rubber component is 600,000 or more, and is preferably 650,000 or more and 900,000 or less. When the product (A × B × C) of the CTAB adsorption specific surface area A, the 24M4DBP absorption amount B, and the carbon black content C is less than 600,000, the responsiveness of changes in electrical resistance to strain is insufficient. On the other hand, when the product (A × B × C) of the CTAB adsorption specific surface area A, the 24M4DBP absorption amount B, and the carbon black content C is 650,000 or more, the responsiveness of changes in electrical resistance to strain is improved, and when it is 900,000 or less, the hardness of the rubber composition is lower, making it suitable for application to rubber tubes in rubber actuators, for example.

The cetyltrimethylammonium bromide (CTAB) adsorption specific surface area A of the carbon black is 110 m²/g or more. When the CTAB adsorption specific surface area of the carbon black is 110 m²/g or more, the particle size of the carbon black is sufficiently small and the electrical resistance is sufficiently low, making it easier to detect the changes in electrical resistance and improving responsiveness.

The cetyltrimethylammonium bromide (CTAB) adsorption specific surface area of the carbon black is preferred to be 120 m²/g or more from the viewpoint of further facilitating detection of changes in electrical resistance, and is preferred to be 160 m²/g or less from the viewpoint of workability.

Note that in this document, the cetyltrimethylammonium bromide (CTAB) adsorption specific surface area of carbon black is a value measured in accordance with JIS K6217-3, and is the external surface area of carbon black, not including micropores, expressed as the specific surface area of carbon black adsorbed with CTAB (cetyltrimethylammonium bromide).

The compressed dibutyl phthalate (24M4DBP) absorption amount B of the carbon black is preferably 90 mL/100 g or more from the viewpoint of further facilitating the detection of changes in electrical resistance to strain, and also, is preferably 130 mL/100 g or less from the viewpoint of reducing variation due to kneading.

Note that in this document, the compressed dibutyl phthalate (24M4DBP) absorption amount B of carbon black is determined by measuring dibutyl phthalate (DBP) absorption amount after four repeated applications of pressure at 24,000 psi, in accordance with ISO 6894. The 24M4DBP absorption amount is used to determine the DBP absorption amount based on the true structure of non-destructive structure form (primary structure), eliminating the DBP absorption amount based on the deformable and destructive structure form (secondary structure) caused by the so-called van der Waals forces. Thus, it is an index to evaluate the skeletal structure of carbon black, which is mainly composed of primary structure.

The content C of the carbon black per 100 parts by mass of the rubber component is preferably 45 parts by mass or more and 75 parts by mass or less, and more preferably 55 parts by mass or more and 70 parts by mass or less. When the carbon black content is 45 parts by mass or more per 100 parts by mass of the rubber component, the electrical resistance of the rubber composition becomes sufficiently low (electricity flows sufficiently) and changes in electrical resistance are even easier to detect. Also, when the carbon black content is 75 parts by mass or less per 100 parts by mass of the rubber component, the electrical resistance of the rubber composition becomes sufficiently high (electricity does not flow too much) and changes in electrical resistance are further easier to detect, and also, the hardness of the rubber composition becomes lower and which makes it suitable for application to, for example, rubber tubes in rubber actuators.

Note that when the electrical resistance is sufficiently high, the electrical resistance changes when the rubber is strained because electricity does not flow too much, and the electrical resistance changes immediately without any delay, making it suitable for use in crack detection. Also, when the electrical resistance is sufficiently low, electricity will flow and energize sufficiently, making it suitable for use in crack detection. In addition, when the carbon black content is 45 parts by mass or more and 75 parts by mass or less per 100 parts by mass of the rubber component, it is possible to detect changes in electrical resistance due to strain without delay and with high sensitivity.

The carbon black is not limited as long as it meets the above conditions, and includes, for example, ISAF and SAF grade carbon blacks. These carbon blacks may be used alone or in combination of two or more.

### (Carbon nanotube)

The conductive rubber composition for sensing of this disclosure may further contains a carbon nanotube. The carbon nanotube acts to improve the conductivity of the composition.

When the conductive rubber composition for sensing of this disclosure contains a carbon nanotube, the content of carbon nanotube is preferably less than 2 parts by mass, and more preferably less than 1 part by mass per 100 parts by mass of the rubber component. When the carbon nanotube content is less than 2 parts by mass per 100 parts by mass of the rubber component, the electrical resistance of the rubber composition becomes sufficiently high (electricity does not flow too much), and the change in electrical resistance is even easier to detect.

The carbon nanotube (CNT) is a structure composed of carbon atoms ranging from several nm to several tens of nm in diameter, and have an extremely fine tube-like structure.

The carbon nanotube can be a single-walled nanotube or a multi-walled nanotube.

The carbon nanotube is preferably 0.1 µm to 30 µm in length, and more preferably 0.1 µm to 10 µm in length.

Also, the carbon nanotube is preferably 10 nm to 300 nm in diameter, and more preferably 100 nm to 250 nm in diameter.

The carbon nanotube can be synthesized by plasma CVD (chemical vapor deposition), thermal CVD, surface decomposition, fluidized vapor synthesis, arc discharge, or other methods, or commercial products can also be used. For example, carbon nanotubes made by KUMHO, vapor grown carbon fibers VGCF^{®} (registered trademark) made by Showa Denko, and carbon nanotubes made by Materials Technologies Research (MTR) in USA, can be used as commercially available carbon nanotubes.

### <Production method for conductive rubber composition for sensing>

The rubber composition of this disclosure can be produced, for example, by compounding the rubber component with carbon black and further compounding with a carbon nanotube(s) if desired, using a Banbury mixer, rolls, etc., and then kneading, warming, and extruding, etc.

In addition to the ingredients mentioned above, the conductive rubber composition for sensing may contain softening agents, stearic acid, antioxidants, zinc oxide (zinc white), vulcanization accelerators, vulcanizing agents, etc., selected as appropriate to the extent not detrimental to the purpose of this disclosure. Commercial products can be suitably used as these compounding agents.

### <Applications of conductive rubber composition for sensing>

The conductive rubber composition for sensing of this disclosure described above can be used for sensing (perceiving, detecting, monitoring, apprehending) the amount of strain because of its good responsiveness of changes in electrical resistance to strain. The conductive rubber composition for sensing can be used for various rubber products, and is especially suitable for rubber tubes for rubber actuators. In addition to rubber actuators, the conductive rubber composition for sensing of this disclosure can be converted to any rubber member that generates strain when used, such as tires, anti-vibration rubber, isolation rubber, conveyor belts, crawlers, gloves, etc., as appropriate, and it goes without saying that the applications are not limited to the above examples but can be applied in a wide range.

### (Rubber actuator)

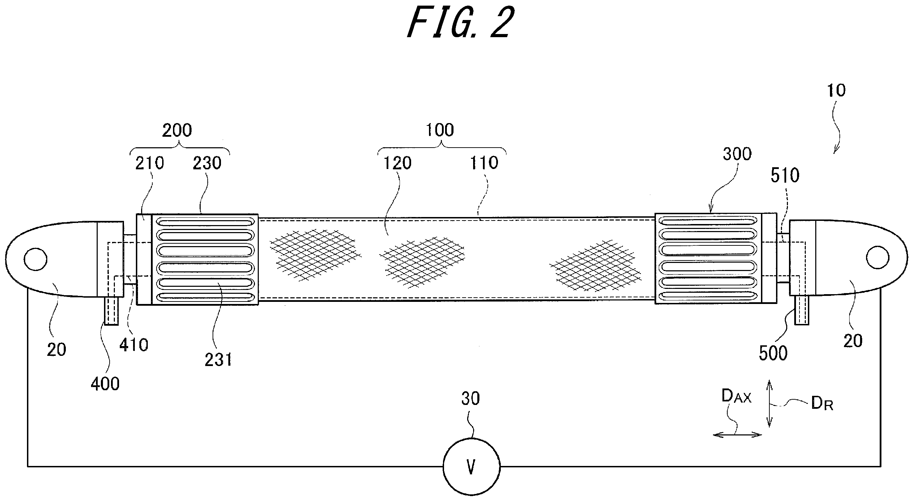

A rubber actuator in a suitable embodiment using the conductive rubber composition for sensing of this disclosure is illustrated in FIG. 2. The rubber actuator 10 illustrated in FIG. 2 comprises an actuator body 100 composed of a tubular rubber tube 110 that expands and contracts due to fluid pressure, and a sleeve 120 that covers the outer surface of the rubber tube 110 with a tubular structure of braided cords oriented in a predetermined direction. The conductive rubber composition for sensing of this disclosure as described above is used in the rubber tube 110.

FIG. 2 is a side view of the rubber actuator 10 according to this embodiment. As illustrated in FIG. 2, the rubber actuator 10 comprises an actuator body 100, a sealing mechanism 200, and a sealing mechanism 300. The rubber actuator 10 is provided with a connecting part 20 at each end. A resistance measuring device 30 is connected to each connecting part 20.

The actuator body 100 is composed of a rubber tube 110 and a sleeve 120. A working fluid flows into the actuator body 100 through a fitting 400 and a passage hole 410. Here, the rubber actuator 10 is actuated by fluid pressure and may be pneumatic or hydraulic, and when a liquid is used as the working fluid, the liquid may be oil, water, etc. When the rubber actuator is a hydraulic type, hydraulic fluid conventionally used in hydraulic drive systems can be used as the working fluid.

The actuator body 100 contracts in the axial direction D_{AX} and expands in the radial direction D_{R} of the actuator body 100 as the working fluid flows into the rubber tube 110. Also, the actuator body 100 expands in the axial direction D_{AX} and contracts in the radial direction D_{R} of the actuator body 100 as the working fluid flows out of the rubber tube 110. This change in the shape of the actuator body 100 allows the rubber actuator 10 to function as an actuator.

Such a rubber actuator 10 is a so-called McKibben type and can be applied for artificial muscles, as well as for body limbs of robots (upper limbs, lower limbs, etc.) that require higher capacity (contractile force). The members constituting the body limb and the like are connected to the connecting parts 20. In this embodiment, the resistance measuring device 30 is connected to the connecting parts 20, but the connecting point of the resistance measuring device 30 is not limited to this, and, for example, the device may be directly connected to both ends of the rubber tube 110.

The sealing mechanism 200 and the sealing mechanism 300 seal both ends of the actuator body 100 in the axial direction D_{AX}. Specifically, the sealing mechanism 200 includes a sealing member 210 and a caulking member 230. The sealing member 210 seals the end in the axial direction D_{AX} of the actuator body 100. The caulking member 230 caulks the actuator body 100 together with the sealing member 210. An indentation 231 is formed on the outer circumference of the caulking member 230, which is the mark where the caulking member 230 was caulked by the jig.

The difference between the sealing mechanism 200 and the sealing mechanism 300 is that the roles of fittings 400, 500 (and passage holes 410, 510) are different.

The fitting 400 provided in the sealing mechanism 200 protrudes so that a hose (conduit) connected to the drive pressure source of the rubber actuator 10, specifically, the compressor of the working fluid, can be attached. The working fluid that flows through the fitting 400 passes through the passage hole 410 and into the interior of the actuator body 100, specifically, the rubber tube 110.

On the other hand, the fitting 500 provided in the sealing mechanism 300 protrudes so that it can be used as a vent when injecting the working fluid into the rubber actuator 10. When the working fluid is injected into the rubber actuator 10 in the early stages of operation of the rubber actuator 10, the gas originally present inside the rubber actuator 10 is expelled from the fitting 500 through the passage hole 510.

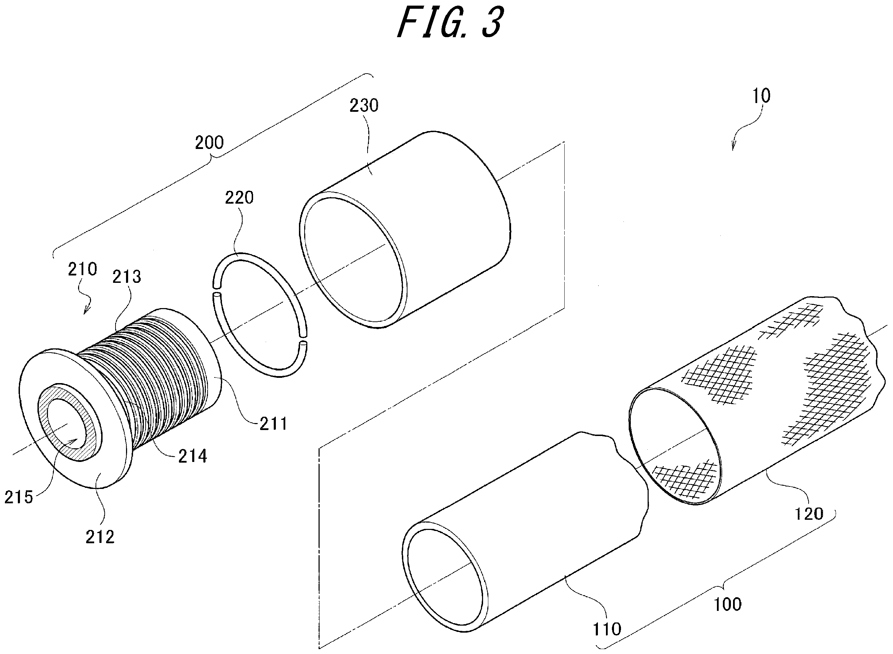

FIG. 3 is a partially exploded perspective view of the rubber actuator 10. As illustrated in FIG. 3, the rubber actuator 10 comprises an actuator body 100 and a sealing mechanism 200.

The actuator body 100 is composed of a rubber tube 110 and a sleeve 120, as described above.

The rubber tube 110 is a cylindrical tubular body that expands and contracts due to fluid pressure. The rubber tube 110 repeatedly contracts and expands due to the working fluid, and is applied with the conductive rubber composition for sensing of this disclosure as described above.

The sleeve 120 is cylindrical and covers the outer surface of the rubber tube 110. The sleeve 120 is a structure of braided cords oriented in a predetermined direction, and the oriented cords intersect to form a repeated rhombus shape. The sleeve 120, by having this shape, pantographically deforms and follows the rubber tube 110 while regulating its contraction and expansion.

In FIG. 3, the sealing mechanism 200 seals the end of the actuator body 100 in the axial direction D_{AX}. The sealing mechanism 200 is composed of a sealing member 210, a locking ring 220, and a caulking member 230.

The sealing member 210 has a trunk part 211 and a brim part 212. A metal such as stainless steel can be suitably used as the sealing member 210, but it is not limited to such metals, and a hard plastic material or the like can also be used.

The trunk part 211 has a circular tubular shape, and a passage hole 215 through which the working fluid passes are formed in the trunk part 211. The passage hole 215 is connected to the passage hole 410 (see FIG. 2). The rubber tube 110 is inserted onto the trunk part 211.

The brim part 212 is connected to the trunk part 211 and is located on the end side in the axial direction D_{AX} of the actuator 10 than the trunk part 211. The brim part 212 has a larger outer diameter along the radial direction D_{R} than the trunk part 211. The brim part 212 secures the rubber tube 110 and the locking ring 220 inserted onto the trunk part 211.

The outer surface of the trunk part 211 is formed with a concavo-convex part 213. The concavo-convex part 213 contributes to the slip control of the rubber tube 110 inserted onto the trunk part 211. It is preferable that three or more convex parts are formed by the concavo-convex part 213.

In addition, at a position closer to the brim part 212 of the trunk part 211, a small diameter part 214 is formed, which has a smaller outer diameter than the trunk part 211.

The locking ring 220 engages the sleeve 120. Specifically, the sleeve 120 is folded outwardly in the radial direction D_{R} through the locking ring 220.

The outer diameter of the locking ring 220 is larger than the outer diameter of the trunk part 211. The locking ring 220 locks the sleeve 120 at the position of the small diameter part 214 of the trunk part 211. In other words, the locking ring 220 locks the sleeve 120 at the position, outward in the radial direction D_{R} of the trunk part 211 and adjacent to the brim part 212.

The locking ring 220 is shaped in two parts in this embodiment in order to be locked to the small diameter part 214, which is smaller than the trunk part 211. The locking ring 220 is not limited to be configured in two parts, but may be divided into more parts, or some of the divided parts may be rotatably connected.

The locking ring 220 can be made of the same metal or hard plastic material as the sealing member 210.

The caulking member 230 caulks the actuator body part 100 together with the sealing member 210. Metals such as aluminum alloy, brass and iron can be used as the caulking member 230. When the caulking member 230 is caulked by a caulking jig, an indentation 231 is formed on the caulking member 230, as illustrated in FIG. 2.

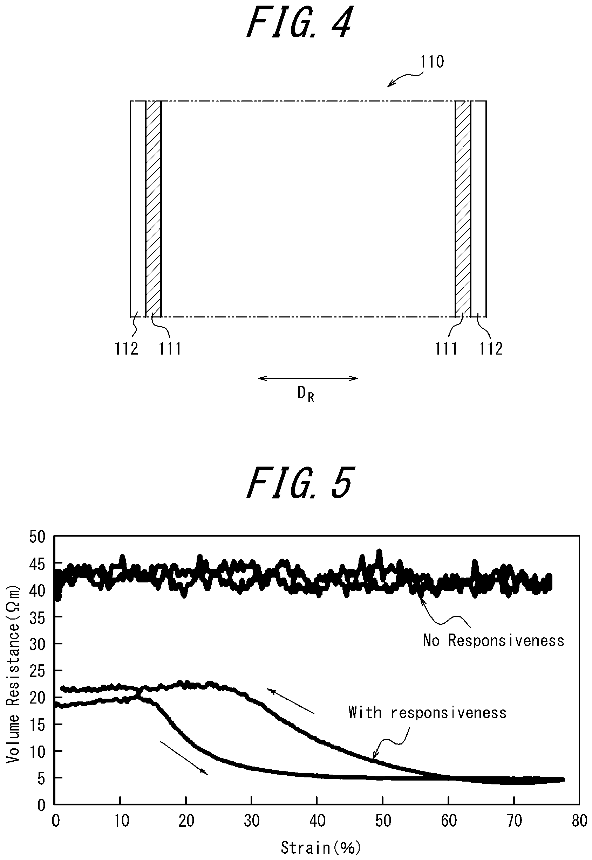

FIG. 4 is a partial cross-sectional view of the rubber tube 110 according to one embodiment.

The rubber tube 110 illustrated in FIG. 4 has a two-layer structure consisting of an inner layer rubber 111 located on the inner surface side of the rubber tube and an outer layer rubber 112 located on the outer surface side of the rubber tube 110, adjacent to the outer side in the radial direction D_{R} of the inner layer rubber 111.

The conductive rubber composition for sensing of this disclosure described above has excellent oil resistance, therefore can be applied to the inner layer rubber 111 that is in contact with the working fluid. If the oil resistance of the inner layer rubber 111 is insufficient, the working fluid may penetrate to the space between the inner layer rubber 111 and the outer layer rubber 112, which may reduce the durability of the rubber tube 110. However, by applying the conductive rubber composition for sensing of this disclosure as described above to the inner layer rubber 111, cracks in the inner layer rubber 111 can be detected at an early stage, and by preventing the ingress of working fluid and replacing the rubber tube 110 at the appropriate time, the rubber actuator can be prevented from stopping functioning.

On the other hand, since the outer layer rubber 112 is in contact with the sleeve 120, it is preferable to apply a rubber composition that has excellent crack resistance, wear resistance, sliding properties, etc., and can withstand loads from the sleeve 120 side.

Note that the rubber tube 110 is not limited to be configured in a two-layer structure, but may have a single-layer structure, or may have three or more layers. When the rubber tube 110 has a laminated structure of three or more layers, it is preferable to apply the conductive rubber composition for sensing of this disclosure as described above to the innermost layer.

As described above, the rubber tube 110 repeatedly contracts and expands due to the working fluid, and is applied with the conductive rubber composition for sensing of this disclosure.

Here, the higher the contraction rate of the actuator body 100, the lower the electrical resistance of the actuator body 100 (rubber tube 110). This is because when fluid flows into the actuator body 100 and the actuator body 100 contracts in the axial direction D_{AX}, the rubber tube 110 expands in the radial direction D_{R} within a predetermined range regulated by the sleeve 120, and the thickness of the rubber tube 110 becomes thinner, thereby the distance between the carbon blacks in the rubber tube 110 is shortened.

Specifically, when the actuator body 100 contracts, the rubber tube 110 expands, resulting in a thinner film thickness of the rubber tube 110. As a result, the dimensions (distance) of carbon blacks in the film thickness direction are narrowed and carbon blacks are brought closer together.

That is, as the contraction rate of the actuator body 100 increases and the length of the actuator body 100 decreases, the distance between the carbon blacks is shortened, thereby the conductivity of the rubber tube 110 increases, in other words, the electrical resistance of the rubber tube 110 decreases.

The repetition of contraction and expansion due to the working fluid may cause cracks in the rubber tube 110. As provided in FIG. 1, the pattern of change in the electrical resistance is different at each stage of the process: no cracks, in the early stages of cracking, and with cracks. Therefore, the dynamic behavior of the change in electrical resistance caused by strain due to the occurrence of cracks in the rubber tube 110 can be analyzed using statistical methods or learned by an AI, so that the occurrence of cracks in the rubber tube 110 can be detected from the dynamic behavior of the change in electrical resistance.

### EXAMPLES

The present disclosure is described in more detail below with examples, but this disclosure is not limited in any way to the following examples.

### <Preparation of rubber composition>

Rubber compositions having the formulations provided in Table 1 were prepared by kneading them in a usual manner. The acrylonitrile unit content and compounding amount of the acrylonitrile-butadiene rubber used, as well as the type, properties, and compounding amount of carbon black, are provided in Table 2.

**[Table 1]**

| Substance Name | Compounding Amount (parts by mass) |
|---|---|
| NBR *1 | Variable |
| Carbon black (CB) *2 | Variable |
| Ester oil *3 | 7.5 |
| Hydrogenated fatty acid *4 | 1 |
| Antioxidant *5 | 1.5 |
| Zinc oxide *6 | 4.97 |
| Vulcanization accelerator A *7 | 0.5 |
| Vulcanization accelerator B *8 | 0.6 |
| Sulfur *9 | 0.6 |

| | |
|---|---|
| *1 NBR: The acrylonitrile unit content and compounding amount of the acrylonitrile-butadiene rubber used are provided in Table 2. *2 Carbon black: The type, properties and compounding amount of carbon black used are provided in Table 2. *3 Estel oil: Product name "TP-95", made by HallStar Company. *4 Hydrogenated fatty acid: Product name "Stearic acid 50S", made by New Japan Chemical Co., LTD. *5 Antioxidant: Polymerized 2,2,4-trimethyl-1,2-dihydroquinoline, Product name "NONFLEX RD", made by Seiko Chemical Co., LTD. *6 Zinc oxide: Product name "Zinc Oxide Type 2 granulated product", made by Hakusui Tech Co., LTD. *7 Vulcanization accelerator A: N-cyclohexyl-2-benzothiazolylsulfenamide, Product name "SANCELER CM-G", made by Sanshin Chemical Co. *8 Vulcanization accelerator B: Tetrakis(2-ethylhexyl)thiuram disulfide, Product name "NOCCELER TOT", made by Ouchi Shinko Chemical Industrial Co., LTD. *9 Surfer: Product name "HK200-5", made by Hosoi Chemical Industry, indicated in Table 1 as the amount of sulfur component. | |

### <Testing with vulcanized rubber>

Rubber sheets of 1 mm thickness were prepared from the resulting rubber compositions and vulcanized them at 155°C for 45 minutes to produce vulcanized rubber sheets. Strip-shaped test pieces of 4.7 mm × 40 mm were prepared from the vulcanized rubber sheets. The presence or absence of strain responsiveness was evaluated on the specimens by the following methods.

### (1) Strain responsiveness test

The prepared test specimens were subjected to 70% elongation for 10 times (repeated the cycle of 0% to 70% elongation to 0% for 10 times) at room temperature and at a distance of 20 mm between chucks using a tensile testing machine (K18003) made by System One, and then dynamic electrical measurements were performed at a tensile speed of 6 mm/sec. The electrical resistance measurements were sampled at DC 10 V and 200 Hz. The electrical resistance values differ reproducibly due to strain, and the ratio of the signal value (S), which is the difference between the minimum and maximum electrical resistance values within the region of 10% elongation to 70% elongation to 10% elongation, to the standard deviation (n) of the electrical resistance values within the region of 0% to 10% elongation was evaluated using the following criteria to determine whether it is sufficient.
o: S/n ratio is 9 or more, with strain responsiveness
×: S/n ratio is less than 9, no strain responsiveness

An example of the strain dependence of electrical resistance is provided in FIG. 5. As provided in FIG. 5, a rubber with a sufficiently large S/n ratio has a large change in electrical resistance due to strain, thus has strain responsiveness, while a rubber with a small S/n ratio has a small change in electrical resistance due to strain, thus has no strain responsiveness.

The results of the above tests are provided in Table 2.

### <Testing with rubber actuators>

The rubber compositions of Example 13, and Comparative Example 16 were applied to the inner layer rubber of the two-layer rubber tube comprising the inner layer rubber and the outer layer rubber illustrated in FIG. 4 to produce cylindrical rubber tubes.

Two aramid fibers of 2200 dtex were used as the base yarn and were subjected to lower twist of 12 times/10 cm and another upper twist of 12 times/10 cm to produce an aramid fiber cord with a diameter of 0.7 mm. A mesh-like sleeve made by braiding 64 aramid fiber cords was prepared. The sleeve had a mesh-like tubular structure with 64 aramid fiber cords observed circumferentially in the transverse cross-section. Specifically, this sleeve had a mesh-like tubular structure consisting of 32 aramid fiber cords arranged in an equally spaced, parallel, spiral pattern, alternately braided with 32 other aramid fiber cords that are diagonally interlaced with these 32 aramid fiber cords and also arranged in an equally spaced, parallel, and spiral pattern. The angle of each cord with respect to the axial direction of the sleeve was 25 degrees.

The rubber actuators with the structure illustrated in FIGS. 2 and 3 were fabricated using the rubber tube and the mesh-like sleeve described above. The length between the sealing mechanism 200 and the sealing mechanism 300 was 250 mm. In addition, as the hydraulic oil for the rubber tube, UF46 made by Cosmo Super Epoch Co., Ltd. was used.

### (2) Crack detection test

Hydraulic fluid was injected into the rubber tube to fully displace the air in the rubber tube with the hydraulic fluid. The injection of hydraulic fluid was performed so that the pressure of the hydraulic fluid in the rubber tube repeated 0 MPa and 5 MPa every 3 seconds, respectively, and the expansion and contraction were repeated until the tube cracked, the crack was extended, and the actuator could no longer perform its function.

At this time, we attempted to detect the occurrence of cracks by monitoring electrical resistance, and succeeded in detecting cracks using AI for the rubber actuator that uses the rubber sample of Example 13, which was evaluated as "with strain responsiveness", for the rubber tube. On the other hand, occurrence of cracks could not be detected in the rubber actuator that uses the rubber sample of Comparative Example 16, which was evaluated as "no strain responsiveness", for the rubber tubes.

**[Table 2]**

| | Compounding Amount of Rubber Component (parts by mass) | | | Acrylonitrile Unit Content in NBR (% by mass) | Compounding Amount of Carbon Black (parts by mass) | | | | Physical Properties of Carbon Black | | | Strain Responsiveness |
|---|---|---|---|---|---|---|---|---|---|---|---|---|
| | NBR1 *10 | NBR2 *11 | NBR3 *12 | | CB1 *13 | CB2 *14 | CB3 *15 | CB4 *16 | CTAB (m²/g) | 24M4DBP (mL/100g) | CTAB×24M4DBP× Compounding Amount | |
| Example 1 | 100 | - | - | 35 | 60 | - | - | - | 112 | 100 | 672000 | ○ |
| Example 2 | 100 | - | - | 35 | - | 50 | - | - | 123 | 100 | 615000 | ○ |
| Example 3 | 100 | - | - | 35 | - | 60 | - | - | 123 | 100 | 738000 | ○ |
| Example 4 | - | 100 | - | 41.5 | 60 | - | - | - | 112 | 100 | 672000 | ○ |
| Example 5 | - | 100 | - | 41.5 | - | 50 | - | - | 123 | 100 | 615000 | ○ |
| Example 6 | - | 100 | - | 41.5 | - | 60 | - | - | 123 | 100 | 738000 | ○ |
| Example 7 | - | - | 100 | 48 | 55 | - | - | - | 112 | 100 | 616000 | ○ |
| Example 8 | - | - | 100 | 48 | 60 | - | - | - | 112 | 100 | 672000 | ○ |
| Example 9 | - | - | 100 | 48 | 65 | - | - | - | 112 | 100 | 728000 | ○ |
| Example 10 | - | - | 100 | 48 | 70 | - | - | - | 112 | 100 | 784000 | ○ |
| Example 11 | - | - | 100 | 48 | - | 50 | - | - | 123 | 100 | 615000 | ○ |
| Example 12 | - | - | 100 | 48 | - | 55 | - | - | 123 | 100 | 676500 | ○ |
| Example 13 | - | - | 100 | 48 | - | 60 | - | - | 123 | 100 | 738000 | ○ |
| Example 14 | - | - | 100 | 48 | - | 65 | - | - | 123 | 100 | 799500 | ○ |
| Comparative Example 1 | 100 | - | - | 35 | 40 | - | - | - | 112 | 100 | 448000 | × |
| Comparative Example 2 | 100 | - | - | 35 | 50 | - | - | - | 112 | 100 | 560000 | × |
| Comparative Example 3 | 100 | - | - | 35 | - | - | 50 | - | 83 | 72 | 298800 | × |
| Comparative Example 4 | 100 | - | - | 35 | - | - | 60 | - | 83 | 72 | 358560 | × |
| Comparative Example 5 | - | 100 | - | 41.5 | 40 | - | - | - | 112 | 100 | 448000 | × |
| Comparative Example 6 | - | 100 | - | 41.5 | 50 | - | - | - | 112 | 100 | 560000 | × |
| Comparative Example 7 | - | 100 | - | 41.5 | - | - | 50 | - | 83 | 72 | 298800 | × |
| Comparative Example 8 | - | 100 | - | 41.5 | - | - | 60 | - | 83 | 72 | 358560 | × |
| Comparative Example 9 | - | - | 100 | 48 | 45 | - | - | - | 112 | 100 | 504000 | × |
| Comparative Example 10 | - | - | 100 | 48 | - | 45 | - | - | 123 | 100 | 553500 | × |
| Comparative Example 11 | - | - | 100 | 48 | - | - | 55 | - | 83 | 72 | 328680 | × |
| Comparative Example 12 | - | - | 100 | 48 | - | - | 60 | - | 83 | 72 | 358560 | × |
| Comparative Example 13 | - | - | 100 | 48 | - | - | 65 | - | 83 | 72 | 388440 | × |
| Comparative Example 14 | - | - | 100 | 48 | - | - | 70 | - | 83 | 72 | 418320 | × |
| Comparative Example 15 | - | - | 100 | 48 | - | - | 75 | - | 83 | 72 | 448200 | × |
| Comparative Example 16 | - | - | 100 | 48 | - | - | - | 50 | 74 | 90 | 333000 | × |

| | | | | | | | | | | | | |
|---|---|---|---|---|---|---|---|---|---|---|---|---|
| *10 NBR1: Acrylonitrile-butadiene rubber, acrylonitrile unit content = 35% by mass, product name "N230S" made by JSR Corporation. *11 NBR2: Acrylonitrile-butadiene rubber, acrylonitrile unit content = 41.5% by mass, product name "N220S" made by JSR Corporation. *12 NBR3: Acrylonitrile-butadiene rubber, acrylonitrile unit content = 48% by mass, product name "N215SL" made by JSR Corporation. *13 CB1: CTAB adsorption specific surface area = 112 m²/g, 24M4DBP absorption amount = 100 mL/100 g, Product name "Seast 6", made by Tokai Carbon Co., Ltd. *14 CB2: CTAB adsorption specific surface area = 123 m²/g, 24M4DBP absorption amount = 100 mL/100 g, Product name "Asahi #78", made by Asahi Carbon Co., Ltd. *15 CB3: CTAB adsorption specific surface area = 83 m²/g, 24M4DBP absorption amount = 72 mL/100 g, Product name "Asahi #70L", made by Asahi Carbon Co., Ltd. *16 CB4: CTAB adsorption specific surface area = 74 m²/g, 24M4DBP absorption amount = 90 mL/100 g, Product name "Asahi #70K", made by Asahi Carbon Co., Ltd. | | | | | | | | | | | | |

The results provided in Table 2 indicate that when the rubber component contains 80% by mass or more of acrylonitrile-butadiene rubber, the responsiveness of changes in electrical resistance to strain becomes better if the product (A × B × C) of the CTAB adsorption specific surface area A and the 24M4DBP absorption B and the content C of the carbon black is 600,000 or more, and the CTAB adsorption specific surface area A is 110 m²/g or more, and thus the occurrence of cracks can be detected.

### INDUSTRIAL APPLICABILITY

The conductive rubber composition for sensing of this disclosure has a good responsiveness of changes in electrical resistance to strain, and thus can be used, as an example, to detect the occurrence of cracks from the changes in electrical resistance, as applied to the rubber tubes in rubber actuators.

### REFERENCE SIGNS LIST

- 10:: Rubber actuator
- 20:: Connecting part
- 30:: Resistance measurement device
- 100:: Actuator body
- 110:: Rubber tube
- 111:: Inner layer rubber
- 112:: Outer layer rubber
- 120:: Sleeve
- 200:: Sealing mechanism
- 210:: Sealing member
- 211:: Trunk part
- 212:: Brim part
- 213:: Concavo-convex part
- 214:: Small diameter part
- 215:: Passage hole
- 220:: Locking ring
- 230:: Caulking member
- 231:: Indentation
- 300:: Sealing member
- 400, 500:: Fitting
- 410, 510:: Passage hole
- D_{AX}:: Axial direction
- D_{R}:: Radial direction

## Claims

1. A conductive rubber composition for sensing, containing a rubber component and carbon black,
wherein the rubber component contains 80% by mass or more of acrylonitrile-butadiene rubber,
a product (A × B × C) of a cetyltrimethylammonium bromide (CTAB) adsorption specific surface area A (m²/g) of the carbon black, a compressed dibutyl phthalate (24M4DBP) absorption amount B (mL/100g) of the carbon black, and a content C (parts by mass) of the carbon black per 100 parts by mass of the rubber component is 600,000 or more, and
the cetyltrimethylammonium bromide (CTAB) adsorption specific surface area A of the carbon black is 110 m²/g or more.

2. The conductive rubber composition for sensing according to claim 1, wherein the rubber component consists solely of acrylonitrile-butadiene rubber with an acrylonitrile unit content of 34% by mass or more.

3. The conductive rubber composition for sensing according to claim 1 or 2, wherein the product (A × B × C) of the cetyltrimethylammonium bromide (CTAB) adsorption specific surface area A (m²/g) of the carbon black, the compressed dibutyl phthalate (24M4DBP) absorption amount B (mL/100g) of the carbon black, and the content C (parts by mass) of the carbon black per 100 parts by mass of the rubber component is 650,000 or more and 900,000 or less.

4. The conductive rubber composition for sensing according to any one of claims 1 to 3, wherein the content C of the carbon black per 100 parts by mass of the rubber component is 45 parts by mass or more and 75 parts by mass or less.
